(19) Europäisches Patentamt
European Patent Office
Office européen des brevets

(11) **EP 3 107 069 A1**

(12) **EUROPEAN PATENT APPLICATION**
published in accordance with Art. 153(4) EPC

(43) Date of publication:
**21.12.2016 Bulletin 2016/51**

(51) Int Cl.:
**G06T 7/20** (2006.01)

(21) Application number: **14886823.5**

(22) Date of filing: **24.03.2014**

(86) International application number:
**PCT/JP2014/058076**

(87) International publication number:
**WO 2015/145543 (01.10.2015 Gazette 2015/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Hitachi, Ltd.**
**Chiyoda-ku**
**Tokyo 100-8280 (JP)**

(72) Inventors:
• **HIRAMATSU, Yoshitaka**
**Tokyo 100-8280 (JP)**

• **AKIYAMA, Yasuhiro**
**Tokyo 100-8280 (JP)**
• **NAKAMURA, Katsuyuki**
**Tokyo 100-8280 (JP)**

(74) Representative: **Addiss, John William**
**Mewburn Ellis LLP**
**City Tower**
**40 Basinghall Street**
**London EC2V 5DE (GB)**

(54) **OBJECT DETECTION APPARATUS, OBJECT DETECTION METHOD, AND MOBILE ROBOT**

(57) An object detection apparatus includes a camera pose calculation unit, a region setting unit, a processing method determining unit, an image generating unit, and an object detection unit, in which the camera pose calculation unit acquires information related to a pose of a camera installed in a mobile object, the region setting unit makes a relation between a location in an image photographed through the camera and a photographed space based on the pose of the camera, and sets a plurality of detection regions on the image based on the relation, the processing method determining unit determines an image processing method including a setting of a resolution for each of the plurality of detection regions, the image generating unit converts an image in each of the detection regions to have the set resolution, and generates a region image, and the object detection unit detects an object using each of the region images.

F I G . 2

**EP 3 107 069 A1**

**Description**

TECHNICAL FIELD

The present invention relates to an object detection apparatus, an object detection method, and a mobile robot, and more particularly, to a technique that enables a mobile object such as a robot to detect an object in a real-world space.

BACKGROUND ART

In recent years, study of photographing an area in front of a vehicle and detecting an object in front of the vehicle has been actively conducted on automobiles. For example, an in-car compound eye camera apparatus in which in a compound eye camera in which optical filters having different characteristics are arranged on the top surface of an imaging element, the optical filters are divided into a plurality of regions, a photographed image has different characteristics according to a region, and image processing according to the characteristics is performed on each region is proposed in Patent Document 1.

CITATION LIST

PATENT DOCUMENT

Patent Document 1: JP 2013-225289 A

SUMMARY OF THE INVENTION

PROBLEMS TO BE SOLVED BY THE INVENTION

The invention disclosed in Patent Document 1 is on the premise of an automobile with four wheels, and the optical filter is arranged to be fixed to the imaging element, and thus the plurality of regions are consistently fixed onto the image in the state in which the compound eye camera apparatus is mounted in the automobile. In the case of a mobile object in which an inclination in a roll direction is ignorable, an object far from its own vehicle or an object higher than its own vehicle is photographed by an upper portion of the imaging element, that is, as an upper portion of the image. On the other hand, an object close to its own vehicle such as a bonnet of its own vehicle or a road surface is photographed by a lower portion of the imaging element, that is, as a lower portion of the image. In other words, in the case of the mobile object in which the inclination in the roll direction is ignorable, a location in the image is associated with a photographed space, and there is no problem even though the plurality of regions are fixed on the image. However, in a mobile object such as a unicycle or a two-wheeled vehicle in which the inclination in the roll direction occurs, when it is inclined in the roll direction, an image in which the top and bottom are inclined is photographed. In other words, when the invention disclosed in Patent Document 1 is applied to the mobile object in which the inclination in the roll direction is unignorable, the location in the image photographed by the camera is not associated with the photographed space, and thus an inappropriate process is likely to be performed.

The present invention was made in order to solve the above problems, and it is an object of the present invention to provide an object detection apparatus and an object detection method, which are capable of properly making a relation between the location in the image and the photographed space, detecting an object at a high detection rate, and improving object detection performance even in the mobile object in which the inclination in the roll direction is unignorable.

SOLUTIONS TO PROBLEMS

An object detection apparatus according to the present invention may employ, for example, configurations set forth in claims. Specifically, an object detection apparatus includes a camera pose calculation unit, a region setting unit, a processing method determining unit, an image generating unit, and an object detection unit, in which the camera pose calculation unit acquires information related to a pose of a camera installed in a mobile object, the region setting unit makes a relation between a location in an image photographed through the camera and a photographed space based on the pose of the camera, and sets a plurality of detection regions on the image based on the relation, the processing method determining unit determines an image processing method including a setting of a resolution for each of the plurality of detection regions, the image generating unit converts an image in each of the detection regions to have the set resolution, and generates a region image, and the object detection unit detects an object using each of the region images.

EFFECTS OF THE INVENTION

According to the present invention, the object detection apparatus calculates a pose of a camera, makes a relation between a location in an image and a photographed space based on the calculated pose of the camera, divides the image photographed by the camera into a plurality of regions based on the relation, and sets a resolution of each region and thus can detect an object at a high detection rate even when an inclination of the camera is large.

BRIEF DESCRIPTION OF THE DRAWINGS

Fig. 1A is a block diagram illustrating a configuration of an object detection apparatus according to a first embodiment of the present invention.
Fig. 1B is a block diagram illustrating a hardware configuration of an information processing apparatus of Fig. 1A.
Fig. 2 is a block diagram illustrating a functional configuration of an information processing unit of Fig. 1A.
Fig. 3 is a flowchart illustrating an operation in which a mobile robot detects an object according to the first embodiment.
Fig. 4 is a time chart diagram corresponding to the flowchart of Fig. 3.
Fig. 5A is a diagram illustrating an example of an image (01-2) photographed at a current timing Tn through a first camera in step S302 of Fig. 3.
Fig. 5B is a diagram illustrating an example of object information (00-3) of an image photographed at a timing Tn-1 in step S303 of Fig. 3.
Fig. 6 is a diagram illustrating a relation between a real-world coordinate system and a coordinate system of a second camera.
Fig. 7A is a diagram illustrating an example of a first obstacle map generated based on object information obtained at an immediately previous timing Tn-1 in step S303 of Fig. 3.
Fig. 7B is a diagram illustrating a second obstacle map generated from a region that is invisible at an immediately previous timing Tn-1.
Fig. 7C is a diagram when Fig. 7B is viewed from a Yw-axis direction.
Fig. 7D is a diagram illustrating an example of a final obstacle map.
Fig. 8 is a flowchart illustrating an operation of setting a plurality of detection regions in an image photographed through a first camera based on a pose of the first camera in step S304 of Fig. 3.
Fig. 9A is a diagram illustrating an aspect in which a plurality of spaces Si are arranged in a world coordinate system in step S305 of Fig. 3.
Fig. 9B is a diagram illustrating an aspect in which a space Si of Fig. 9A is viewed from a Yw-axis direction of a world coordinate system and an aspect in which a space Si of Fig. 9A is viewed from an Xw-axis direction.
Fig. 10A is a diagram illustrating an example of an obstacle map.
Fig. 10B is a diagram illustrating a space Si arranged in a world coordinate system.
Fig. 10C is a diagram illustrating a space $S_i'$ obtained by modifying the space Si illustrated in Fig. 10B according to the obstacle map illustrated in Fig. 10A.
Fig. 10D is a diagram illustrating another example of a space Si arranged in a world coordinate system.
Fig. 10E is a diagram illustrating a space $S_i'$ obtained by modifying the space Si illustrated in Fig. 10D according to the obstacle map illustrated in Fig. 10A.
Fig. 11A is a diagram illustrating an aspect in which a range including a certain space $S_i'$ is photographed through a first camera.
Fig. 11B is a diagram illustrating a detection region Ci corresponding to a space $S_i'$ in a photographed image I.
Fig. 11C is a diagram illustrating an example of a detection region $C_i$ calculated with respect to an image (01-2) photographed through a first camera.
Fig. 12 is a diagram illustrating an operation flow of step S306 of Fig. 3.
Fig. 13A is a diagram illustrating an aspect in which an object arranged at a position furthest from a camera in a certain space $S_i'$ is photographed on an imaging plane of an image in a transverse direction with a predetermined number of pixels.
Fig. 13B is a diagram illustrating an aspect in which an image is photographed in a longitudinal direction with respect to the same object as in Fig. 13A.
Fig. 14 is a diagram illustrating a result of performing an object detection process on an image (01-2) photographed through a first camera through an object detection unit.

MODE FOR CARRYING OUT THE INVENTION

Hereinafter, embodiments of the present invention will be described with reference to the appended drawings. In the drawings, components having the same reference numerals are assumed to have the same function.

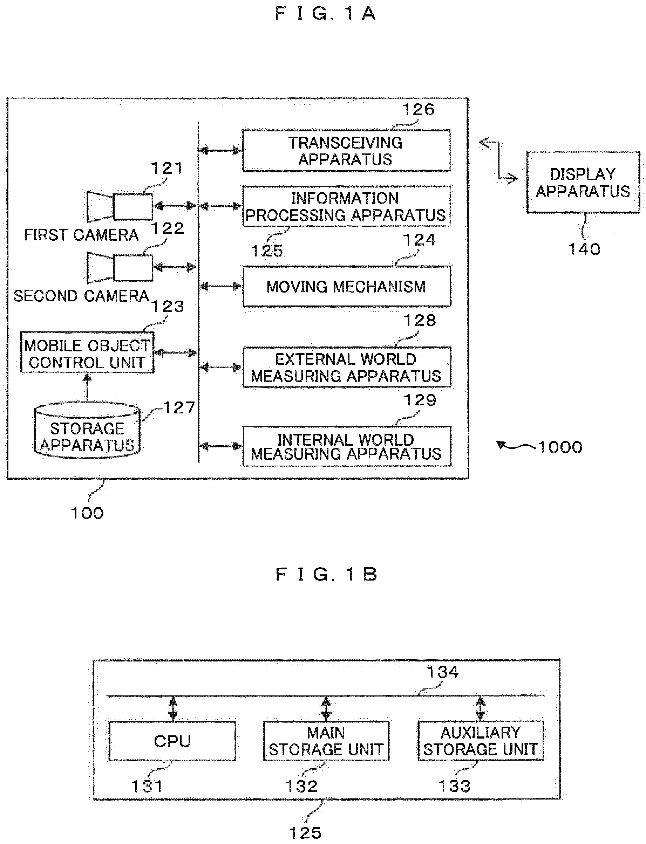

Fig. 1A is a block diagram illustrating a configuration of an object detection apparatus 1000 according to a first embodiment of the present invention. Fig. 1B is a block diagram illustrating a hardware configuration of an information processing apparatus of Fig. 1A. The object detection apparatus 1000 includes a mobile object (mobile robot) 100 that moves along a path and a display apparatus 140. In the present embodiment, the mobile object 100 is a mobile object in which the inclination in the roll direction may occur during traveling along the path. The mobile robot 100 includes a robot main body (not illustrated), a moving mechanism 124 that causes the robot main body to move (autonomously travel) along the path, a first camera 121 mounted in the robot main body, a second camera 122, a mobile object control unit 123, an information processing apparatus 125, a transceiving apparatus 126, a storage apparatus 127, an external world measuring apparatus 128, and an internal world measuring apparatus 129. For example, the display apparatus 140 is a tablet terminal having a display screen having a communication function and a GUI function.

The first and second cameras 121 and 122 are cameras that photograph a space in front of the mobile robot 100. Fig. 1A illustrates two robot cameras, but the second camera 122 may undertake the role of the first camera 121. Alternatively, two first cameras 121 may be arranged. The mobile object control unit 123 controls the respective functional units with which the mobile robot 100 is equipped. The moving mechanism 124 is a mechanism of moving the mobile robot 100 itself based on control of the mobile object control unit 123. The information processing apparatus 125 functions as an object detection processing unit that processes an image photographed through a camera and detects an object in front of the mobile robot 100.

A specific example of the mobile robot 100 includes an electric two-wheel humanoid mobile robot 100 that travels as the wheels are driven by a motor serving as the moving mechanism 124. The moving mechanism 124 may be an electric one-wheel mobile robot.

As illustrated in Fig. 1B, the information processing apparatus 125 includes a CPU 131, a main storage unit 132, an auxiliary storage unit 133, and a bus 134. The devices 131 to 133 are connected to the bus 134, and transmission and reception of data are performed among the devices. An auxiliary operation unit 135 may be arranged separately from the CPU 131.

The CPU 131 reads a program stored in the main storage unit 132 or the auxiliary storage unit 133, executes an operation, and outputs an operation result to the main storage unit 132, the auxiliary storage unit 133, or the mobile object control unit 123.

The main storage unit 132 stores the program executed by the CPU 131, the result of the operation executed by the CPU 131, and setting information used by the information processing apparatus 125. For example, the main storage unit 132 is implemented by a random access memory (RAM), a read only memory (ROM), or the like.

The auxiliary storage unit 133 stores the program executed by the CPU 131, the result of the operation executed by the CPU 131, and setting information used by the information processing apparatus 125. Particularly, the auxiliary storage unit 133 is used to store data that cannot be stored in the main storage unit 132 or to hold data even in a state in which power is turned off. For example, the auxiliary storage unit 133 is configured with a magnetic disk drive such as a hard disk drive (HDD), a non-volatile memory such as a flash memory, or a combination thereof. Information related to an object such as a shape of a vehicle, a person, a building, or the like is set to the auxiliary storage unit 133 as a detection target in advance. The display apparatus 140 is configured with an information processing apparatus having a similar function as the information processing apparatus.

The transceiving apparatus 126 communicates with the display apparatus 140 to receive a command of the user that is given from the display apparatus 140 to the mobile robot 100 and outputs a processing result of the information processing apparatus 125 to the display apparatus 140.

The storage apparatus 127 stores a processing program for movement control for moving the mobile robot 100, data such as the setting information, a space map of a monitoring target, and the like. The storage apparatus 127 can be implemented using a storage apparatus such as a HDD. The information related to the object which is set to the auxiliary storage unit 133 may be set to the storage apparatus 127.

The external world measuring apparatus 128 is an external world sensor that measures data indicating a relative position or an absolute position in an outside (an actual environment) of the mobile robot 100, and includes, for example, a landmark detection sensor (a laser range finder or the like) that measures a landmark and measures the relative position of the mobile robot 100, a GPS device that receives radio waves from GPS satellites and measures the absolute position of the mobile robot 100, and the like.

The internal world measuring apparatus 129 is a sensor that measures a rotational amount of the wheel in the inside of the mobile robot 100 (the moving mechanism 124) and a pose (acceleration of three rotational axes and three translation axes) measured by a gyro sensor, and includes, for example, a rotary encoder that measures a rotational amount of the wheel of the mobile robot 100, a gyro sensor that measures the pose (acceleration of three rotational axes and three translation axes) of the mobile robot 100, and the like.

The configuration of the mobile robot 100 is not limited thereto, and the mobile robot 100 may have a moving mechanism and an imaging function.

As a configuration and a processing operation of a processing program for autonomous movement control of the mobile robot 100, a configuration and a processing operation of a processing program capable of causing the mobile robot 100 to reach a destination by causing the mobile robot 100 to autonomously move in an actual environment to follow a planned path while estimating its own position on a map corresponding to an actual environment based on measurement data measured by an external world sensor and an internal world sensor may be used.

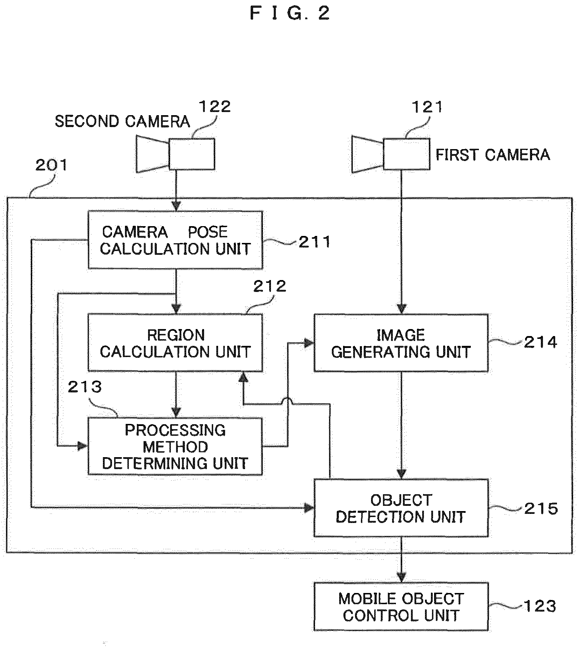

Fig. 2 is a block diagram illustrating a functional configuration of an object detection processing unit 201 which is implemented by executing the processing program stored in the main storage unit 132 or the auxiliary storage unit 133 through the CPU 131 of the information processing apparatus 125. The object detection processing unit 201 includes a camera pose calculation unit 211, a region calculation unit 212, a processing method determining unit 213, an image generating unit 214, and an object detection unit 215.

The camera pose calculation unit 211 calculates a pose of the second camera 122 using two or more first frame images (first images) acquired by the second camera 122, and calculates a pose of the first camera 121 based on the calculated pose of the second camera 122 and a pose of the first camera 121 with respect to the second camera 122 that is calculated in advance. Further, when the first frame images are determined not to be normal, for example, when it is determined that there is a large change in a plurality of consecutive first frame images or when the frame images have a uniform color, and an area in front thereof is determined not to be photographed, the camera pose calculation unit 211 transmits a flag indicating an abnormality of the frame image to the region calculation unit 212 and the object detection unit 215.

The camera pose calculation unit 211 may acquire the pose of the first camera 121 measured using the gyro sensor with which the internal world measuring apparatus 129 is equipped. A pose that is obtained as a result of integrating the pose measured using the gyro sensor with which the internal world measuring apparatus 129 is equipped with the pose of the first camera 121 calculated using the two or more first frame images acquired by the second camera 122 may be output as a result.

The region calculation unit (region setting unit) 212 acquires the pose of the first camera 121 from the camera pose calculation unit 211, makes a relation between a location in a second image of the first camera 121 and a photographed space based on the acquired pose, acquires object information of the second image of a previous frame stored in the main storage unit 132, and sets a plurality of regions to the inside of the second image photographed by the first camera 121 based on the relation and the acquired object information.

The processing method determining unit 213 determines an image processing method including a setting of a resolution necessary for detection of an object on each of a plurality of regions in the second image calculated by the region calculation unit 212.

The image generating unit 214 generates a region image by performing image processing on each of a plurality of regions in the second image calculated by the region calculation unit 212 based on the image processing method including the resolution determined by the processing method determining unit 213.

The object detection unit 215 acquires the flag indicating the abnormality of the frame image from the camera pose calculation unit 211, acquires a plurality of region images from the image generating unit 214, detects an object in each of the region images in the second image based on the object information, integrates an obtained detection result with the object information obtained at a previous timing, stores an integration result in the main storage unit 132, and transmits the integration result to the mobile object control unit 123. The detection result of the object stored in the main storage unit 132 is also output to the display apparatus 140 through the transceiving apparatus 126.

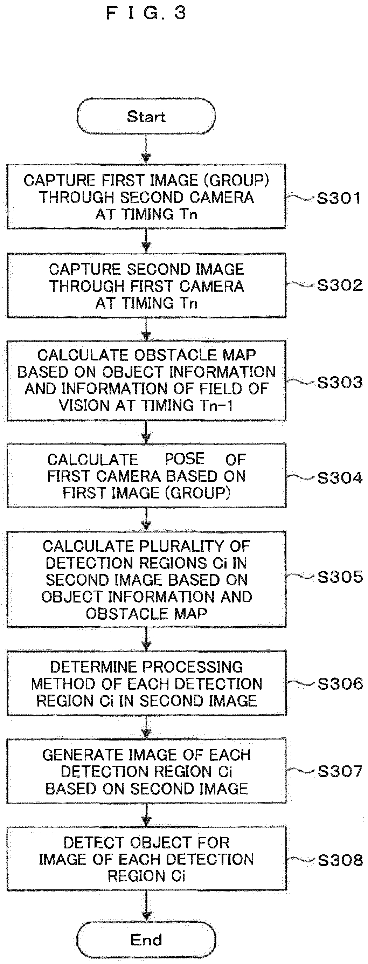

Fig. 3 is a flowchart illustrating a process flow of the object detection processing unit 201, that is, an operation in which the mobile robot 100 detects an object.

First, at a timing Tn, the second camera 122 photographs the space in front of the mobile robot 100, and acquires two or more temporally consecutive first frame images (S301). At the same timing, the first camera 121 photographs the space in front of the mobile robot 100, and acquires one second frame image (S302). The region calculation unit 212 calculates an obstacle map based on the object information that is obtained at an immediately previous timing Tn-1 and stored in the main storage unit 132 and region information that is invisible as a field of vision at the immediately previous timing Tn-1 (S303).

Then, the camera pose calculation unit 211 calculates a plurality of feature points on each of the two or more first frame images stored in the main storage unit 132, associates a set of calculated feature points, calculates the pose of the second camera 122 based on the set of associated feature points, and calculates the pose of the first camera 121 for the world coordinate system based on the pose of the second camera 122 and the pose of the first camera 121 with respect to the second camera 122 which is calculated in advance (S304).

Then, the region calculation unit 212 acquires the pose of the first camera 121 from the camera pose calculation unit 211, makes a relation between the location in the second image and the photographed space based on the pose, and calculates a plurality of detection regions Ci in the second image photographed by the first camera 121 based on the object information and the obstacle map (S305).

Then, the processing method determining unit 213 determines an image processing method (a conversion rate $m_i/n_i$ times and a cutoff frequency fi of a low pass filter) including a resolution for object detection for each of the detection regions Ci calculated by the region calculation unit 212 (S306).

Then, the image generating unit 214 generates N images by clipping portions of the detection regions $C_i$ from the second image stored in the main storage unit 132 using the detection regions Ci calculated by the region calculation unit 212 and the image processing method calculated by the processing method determining unit 213 (S307).

Finally, the object detection unit 215 performs an object detection process on the generated N images, and detects an object (S308).

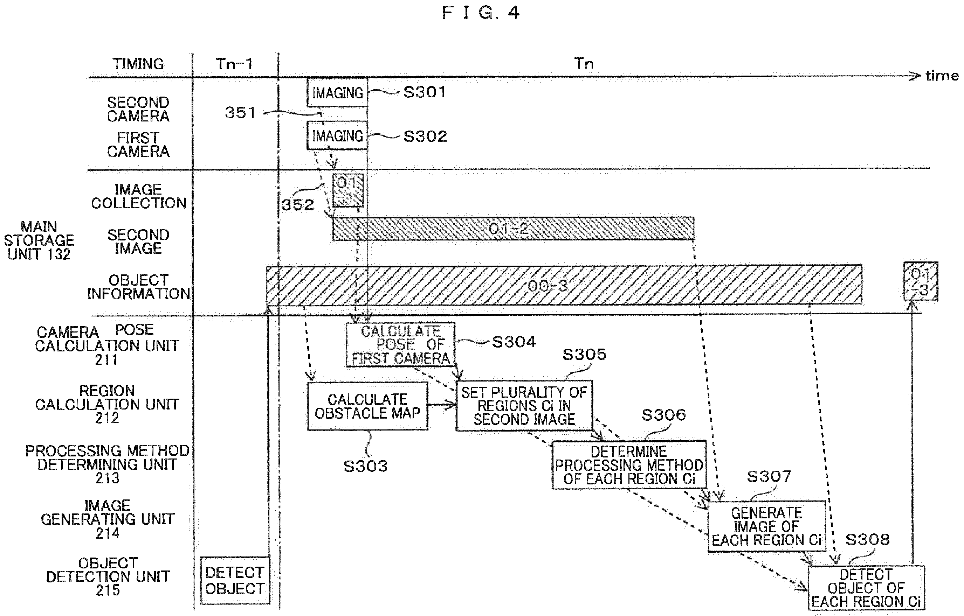

Fig. 4 is a diagram for describing the respective steps of Fig. 3, that is, the operation in which the mobile robot 100 detects the object using a time chart. Hereinafter, the respective steps will be described with reference to Figs. 4 to 14 in connection with each series of related operations.

[S301 to S302 and S304] (Image acquisition and camera pose calculation):

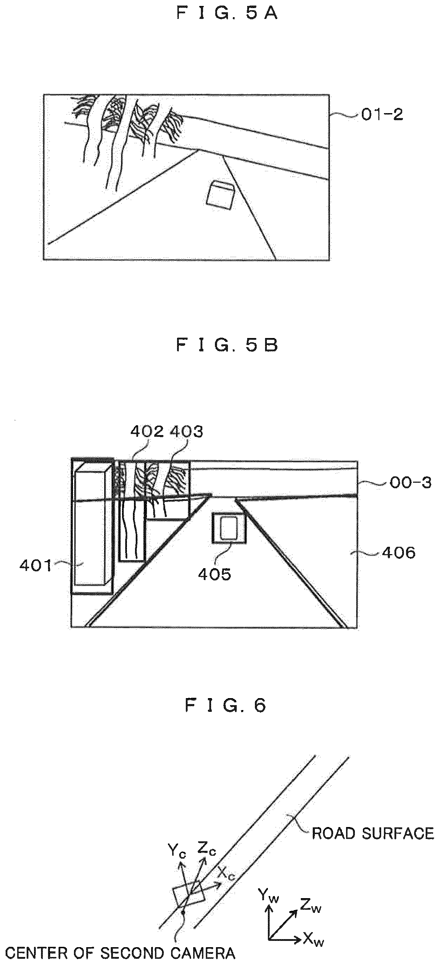

First, image acquisition and camera pose calculation processes (S301 to S302 and S304) will be described with reference to Figs. 5A to 6.

As illustrated in Fig. 4, the second camera 122 photographs the space in front thereof at the current timing Tn, and acquires two or more temporally consecutive frame images (01-1), that is, the first images (S301). The photographed frame images (01-1) are stored in the main storage unit 132 as indicated by an arrow 351. At the same timing Tn as in step S301, the first camera 121 photographs the space in front thereof, and acquires one frame image (01-2), that is, the second image (S302). The photographed frame image (01-2) is stored in the main storage unit 132 as indicated by an arrow 352.

Fig. 5A illustrates an example of an image (01-2) photographed at the current timing Tn through the first camera 121, and this image is photographed through the camera on the mobile object in which the inclination in the roll direction occurs.

Object information (00-3) obtained from an image photographed at the immediately previous timing Tn-1 is also stored in the main storage unit 132. Fig. 5B is an example of the object information (00-3) at the timing Tn-1, and objects 401 to 406 are included in the object information (00-3). For example, the object 405 is a vehicle.

After step S301 is completed, the camera pose calculation unit 211 calculates a plurality of feature points for each of the two or more frame images stored in the main storage unit 132 (which is referred to as an image collection (01-1) in Fig. 4), associates a set of calculated feature points, calculates the pose of the second camera 122 based on the set of associated feature points, and calculates a pose of the first camera 121 including the inclination in the roll direction for the world coordinate system based on the calculated pose of the second camera 122 (S304).

Fig. 6 is a diagram illustrating a relation between the real-world coordinate system (hereinafter, referred to as a "world coordinate system") serving as a first coordinate system and a coordinate system (hereinafter, referred to as a "camera coordinate system") of the second camera 122 serving as a second coordinate system. In the following description, the first coordinate system, that is, the world coordinate system is indicated by coordinates Pw = (Xw, Yw, Zw), and the second coordinate system, that is, the camera coordinate system is indicated by coordinates Pc = (Xc, Yc, Zc). Fig. 6 illustrates an aspect in which the camera coordinate system is inclined along a Zw axis of the world coordinate system. It is equivalent to the fact that an Xc axis of the camera coordinate system is inclined from an Xw axis (hereinafter, referred to as a "roll direction") of the world coordinate system. When the translation of the camera relative to the world coordinate system is indicated by Tcw, and the rotation thereof is indicated by Rcw, the pose of the second camera 122 is indicated by the translation Tcw and the rotation Rcw. A relation between the coordinates Pw and the coordinates Pc is indicated by the following Formula (1):

$$Pc = Rcw \times Pw + Tcw \quad \dots \quad (1)$$

The translation Tcw and the rotation Rcw may be calculated based on the set of associated feature points using a known method.

Further, when a distance on the image between the set of associated feature points is larger than a predetermined distance or when there are a predetermined number or more of feature points that have failed to be associated, a change in the temporally consecutive frame images is regarded as being large, and the flag indicating the abnormality of the frame image is transmitted to the region calculation unit 212 and the object detection unit 215. Further, even when the frame images have a uniform color, the flag indicating the abnormality of the frame image is transmitted to the region calculation unit 212 and the object detection unit 215. When the flag indicating the abnormality of the frame image is transmitted, a pose in a current frame is calculated using a set of poses of a camera in images of several immediately previous frames. For example, a result of calculating an average of temporal changes of the pose of the camera of several immediately previous frames and adding the average to the pose of the camera in the immediately previous frame may be determined as the pose of the current frame.

Next, a method of calculating the pose of the first camera 121 for the world coordinate system based on the pose of the second camera 122 and the pose of the first camera 121 with respect to the second camera 122 which is calculated in advance will be described. When the translation of the first camera 121 relative to the second camera 122 is indicated by Tc2c1, and the rotation thereof is indicated by Rc2c1, a relation between coordinates Pc1 indicating the coordinate system of the second camera 122 and coordinates Pc2 indicating the coordinate system of the first camera 121 is expressed by Formula (2):

$$\text{Pc2 = Rc2c1} \times \text{Pc1 + Tc2c1 ... (2)}$$

The pose of the first camera 121 is a translation Tc2w and a rotation Rc2w of the first camera 121 relative to the world coordinate system, and calculated as Tc2w = Rc2c1 × Tc1w + Tc2c1 and Rc2w = Rc2c1 × Rc1w based on Formula (3) obtained based on a relational expression of Formulas (1) and (2):

$$\text{Pc2 = (Rc2c1} \times \text{Rc1w)} \times \text{Pw + (Rc2c1} \times \text{Tc1w + Tc2c1) ... (3)}$$

The translation Tc2c1 and the rotation Rc2c1 of the first camera 121 relative to the second camera 122 are calculated in advance as described above. The calculated pose of the first camera 121 is stored in the main storage unit 132 and used as prior information when the pose of the first camera 121 is calculated at a next timing.

[S303] (Obstacle map calculation):

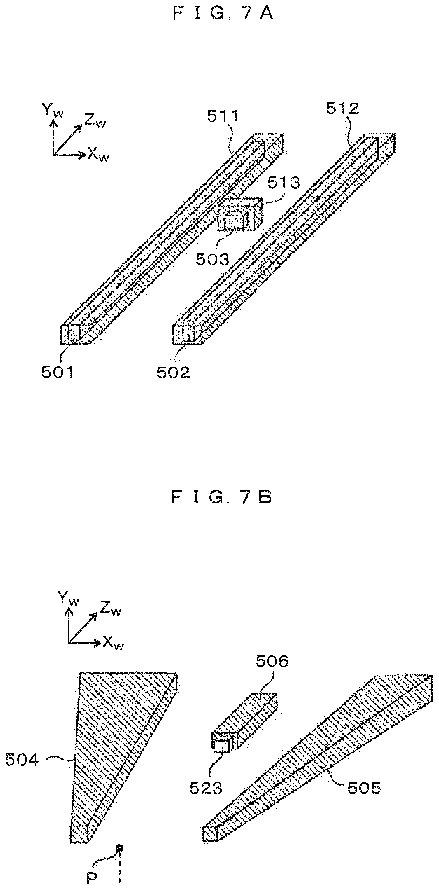

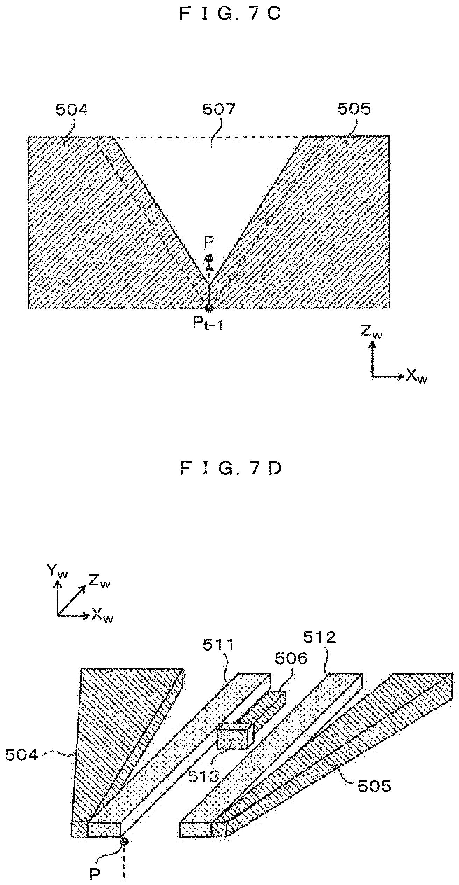

The obstacle map calculation process (S303) will be described with reference to Fig. 7.

Before the process of calculating the pose of the first camera 121 at the current timing Tn (S304) is performed, the region calculation unit 212 calculates the obstacle map two pieces of information, that is, the object information (00-3) that is obtained at the immediately previous timing Tn-1 and stored in the main storage unit 132 and the region that is invisible at the immediately previous timing Tn-1 (S303). The immediately previous timing Tn-1 indicates a timing at which the first and second cameras 121 and 122 perform the photography before S301 and S302 are performed.

Hereinafter, the obstacle map is referred to as a "map" indicating a region that can be an obstacle at the current timing Tn.

Figs. 7A to 7D are diagrams illustrating examples of the obstacle map in the world coordinate system Pw = (Xw, Yw, Zw).

Fig. 7A is a first obstacle map generated based on the object information obtained at the immediately previous timing Tn-1. In Fig. 7A, 501 to 503 are objects of the object information (00-3) detected from the immediately previous image photographed at the immediately previous timing Tn-1, and regions 511 to 513 are regions in which the objects 501 to 503 are obstacles at the current timing Tn. The regions 511 to 513 are calculated as regions to which the detected objects are movable during a period of time from the immediately previous timing to the current timing. For example, the region 511 is a range that is apart from the object 501 by a predetermined distance. When a type of object is specified, a movable range can be calculated according to a movement model corresponding to the type. When a type of object is not specified, a movable region may be calculated using a movement model of each size of an object that is prepared in advance.

Fig. 7B illustrates a second obstacle map generated based on the region that is invisible at the immediately previous timing Tn-1. In Fig. 7B, regions 504 and 505 are regions that are generated based on regions out of the field of vision of the camera at the immediately previous timing and serves as an obstacle at the current timing Tn.

Fig. 7C is a diagram when Fig. 7B is viewed from a Yw-axis direction. The regions 504 and 505 are combined regions in which a region in which an object assumed to be present in an outer region out of a field 507 of vision at the immediately previous timing Tn-1 is movable to be within the field 507 of vision until the current timing Tn is combined with another region out of the field 507 of vision. Thus, the regions 504 and 505 overlap a part of the field 507 of vision.

A region 506 is a region serving as an obstacle at the current timing Tn due to influence of an object 523 obtained at the immediately previous timing illustrated in Fig. 7B. Since a space behind the object 523 is invisible at a camera position P, it is difficult to determine whether or not there is an object. In this regard, there is assumed to be an object in an invisible region, and a movable region to which the object is movable until the current timing Tn is regarded as a region serving as an obstacle at the current timing. The region 506 is larger than the object 523 at the Xw and the Yw axis as illustrated in Fig. 7B.

Fig. 7D is a diagram illustrating a final obstacle map. Respective regions of Fig. 7D are the same as those in the first obstacle map (511 to 513) of Fig. 7A and those in the second obstacle map (504 to 506) of Fig. 7B.

Further, when the flag indicating the abnormality of the frame image (01-2) is transmitted the camera pose calculation unit 211, the movable region during the period of time from the immediately previous timing Tn-1 to the current timing Tn may be widely set when the regions 504 to 506 and the regions 511 to 513 are calculated. Thus, it is possible to cover deviations of the regions 504 to 506 and the regions 511 to 513 occurring due to an error of the pose of the first camera 121 and suppress degradation in the object detection performance.

Further, when the flag indicating the abnormality of the frame image is transmitted from the camera pose calculation unit 211, the movable range during the period of time from the immediately previous timing Tn-1 to the current timing Tn may be widely set. Thus, it is possible to cover deviations of the regions 511 to 513 occurring due to an error of the pose of the first camera 121 and suppress degradation in performance of the object detection unit 215.

[S305 to S306] (Calculation of plurality of regions in image and determination of processing method of each region):

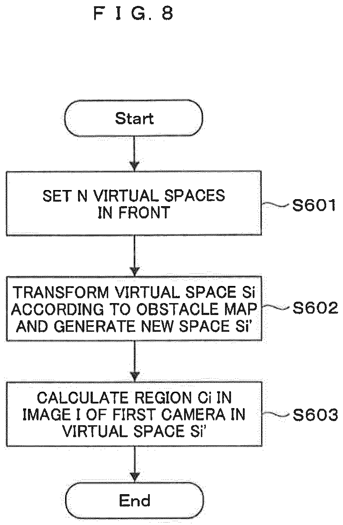

Next, a process (S305 to S306) of calculating a plurality of regions in an image and determining a processing method of each region will be described with reference to Figs. 8 to 13.

The region calculation unit 212 acquires the pose of the first camera 121 from the camera pose calculation unit 211, makes a relation between the location in the second image and the photographed space based on the acquired pose, and calculates and sets a plurality of regions in the second image photographed by the first camera 121 based on the obtained relation (S305). Hereinafter, this process is illustrated in Fig. 8.

Fig. 8 is an operation flow diagram of step S305.

The region calculation unit 212 virtually arranges a space Si having a width $S_{wi}$ and a depth $S_{Di}$ at a position on a road surface that is apart from the camera position P by a Zw-axis distance Di (i = 1, 2, ..., N) in the world coordinate system (S601).

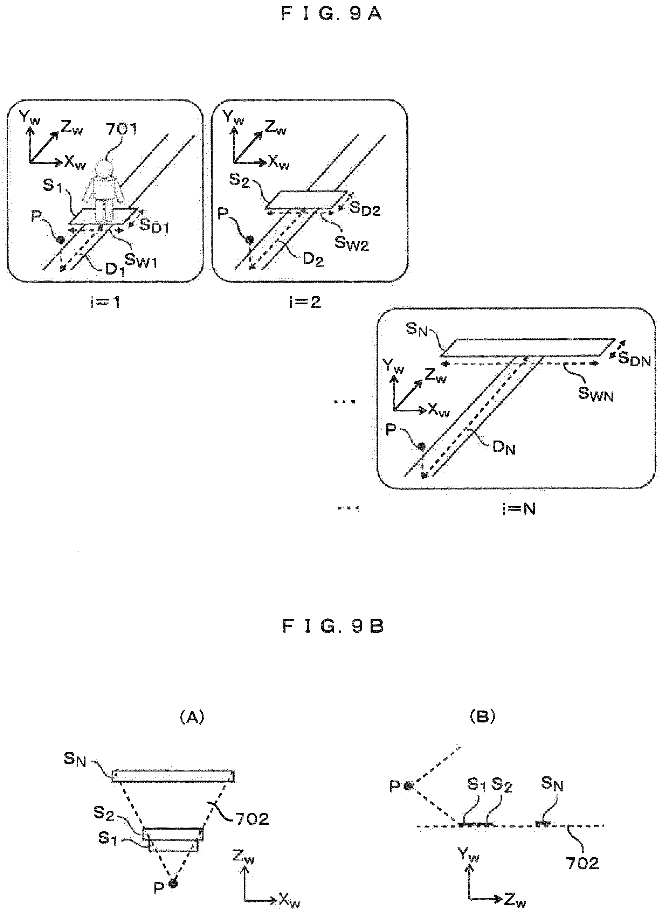

Figs. 9A and 9B are diagrams illustrating an aspect in which, the space Si is arranged in the world coordinate system in units of i. The space $S_i$ is set at a photography direction side of the camera. For example, the space Si is a rectangular region on the same plane as the road surface as illustrated in Figs. 9A and 9B. The depth $S_{Di}$ is set to a value that is slightly larger than a depth of an object 701 (for example, a person) of as a detection target illustrated in Fig. 9A. (A) of Fig. 9B is a diagram illustrating an aspect in which the space Si is viewed from the Yw-axis direction of the world coordinate system. The width $S_{wi}$ is set to a value that is in proportion to the distance $D_i$ and covers a field 702 of vision of the camera. (B) of Fig. 9B is a diagram illustrating an aspect in which the space Si is viewed from the Xw-axis direction of the world coordinate system. The number N of spaces can be decided by "first integer satisfying $\sum S_{Di} > $ (Dmax - Dmin) - 1" when a detection target distance is indicated by Dmax, and a minimum photography distance is indicated by Dmin. The detection target distance Dmax is set in advance. The minimum photography distance Dmin is calculated and set using a height and an internal parameter of the camera in advance. For example, a value of the distance Di is set such that the space Si and the space $S_j$ (j ≠ i) are arranged not to overlap, and the space Si is arranged to be adjacent to the space $S_{i+1}$. The space Si and the space $S_{i+1}$ may be arranged to overlap. Thus, as the number of spaces increase, the calculation amount of the object detection unit 215 increases, but since influence of a break between spaces is suppressed, the detection accuracy increases.

The region calculation unit 212 modifies the space Si arranged in S601 according to the obstacle map generated in S303 (S602). The modified new space is indicated by $S_i'$.

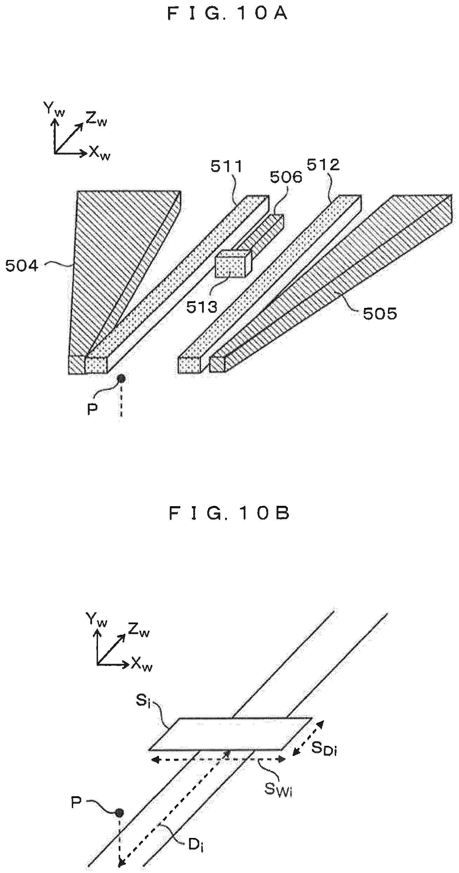

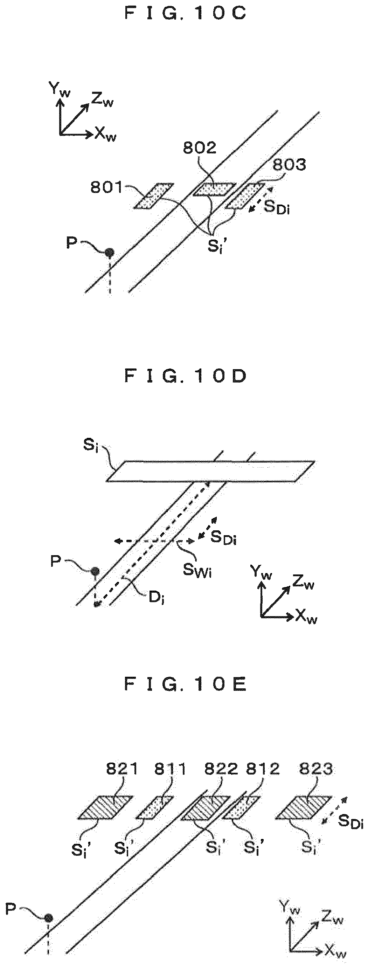

Figs. 10A to 10E are diagrams illustrating an example of modifying the obstacle map. Fig. 10A illustrates an example of the obstacle map which is the same as in Fig. 7D. Fig. 10B is a diagram illustrating the space $S_i$ arranged in the world coordinate system. Fig. 10C is a diagram illustrating the space $S_i'$ obtained by modifying the space Si illustrated in Fig. 10B according to the obstacle map illustrated in Fig. 10A. In Fig. 10C, each of regions 801 to 803 in which the space Si overlaps with the regions 511 to 513 corresponds to the modified space $S_i'$.

Fig. 10D is a diagram illustrating another example of the space Si arranged in the world coordinate system. Fig. 10E is a diagram illustrating the space $S_i'$ obtained by modifying the space Si illustrated in Fig. 10D according to the obstacle map illustrated in Fig. 10A. In Fig. 10E, each of regions 821 to 823 in which the space Si overlaps with the regions 504 to 506 and each of regions 811 and 812 in which the space Si overlaps with the regions 511 and 512 correspond to the modified space $S_i'$.

Further, when the flag indicating the abnormality of the frame image is transmitted from the camera pose calculation unit 211, the calculated pose of the first camera 121 is determined to have a large error than an original value, and thus the space Si may be output as the space $S_i'$ without modifying the space Si according to the obstacle map. As a result, it is possible to suppress the degradation in the performance of the object detection unit 215 caused by the deviations of the regions 504 to 506, the regions 511 to 513 occurring due to the error of the pose of the first camera 121.

Further, when there is determined to be room in the processing load of the CPU 131, the space Si may be output as the space $S_i'$ without modifying the space Si according to the obstacle map. Thus, when an object detection omission has occurred in the detection result of the object detection unit 215 at a previous timing, a possibility that an object will be detected is high.

The region calculation unit 212 calculates the detection region Ci corresponding to the modified space $S_i'$ in the image I obtained by the photography performed by the first camera 121 (S603).

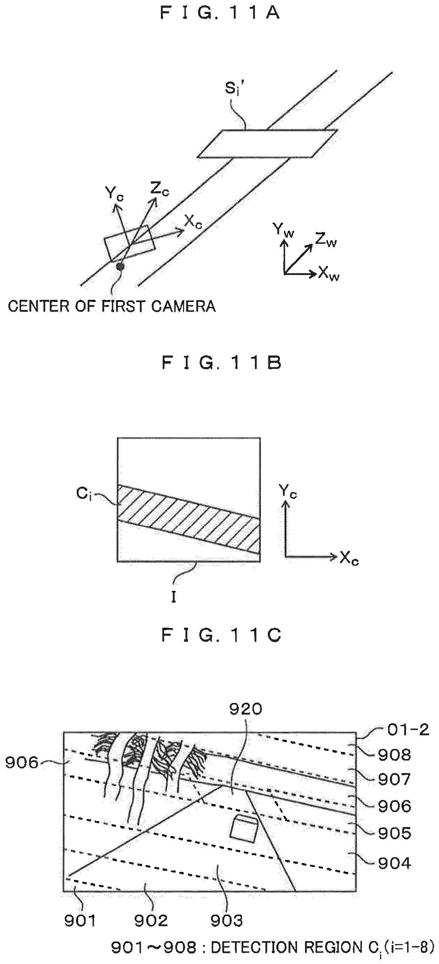

Figs. 11A to 11B are diagrams illustrating an aspect in which the range including the space $S_i'$ is photographed by the first camera 121 and illustrating the detection region Ci corresponding to the space $S_i'$ in the photographed image I. When the first camera 121 is inclined in the roll direction in the world coordinate system as illustrated in Fig. 11A, the detection region Ci is inclined on the image I as illustrated in Fig. 11B. In other words, when the inclination occurs in the roll direction, a correspondence between a location in the image I and a space set in the world coordinate system changes.

Fig. 11C illustrates an example of a plurality of internal detection regions Ci that are calculated by the region calculation unit 212 in connection with the frame image (01-2) of Fig. 5A photographed at the current timing through the first camera 121. The region calculation unit 212 makes a relation between the location in the image (01-2) and the photographed space based on the pose of the first camera 121 inclined in the roll direction, and acquires information of the objects 401 to 406 of the frame image (00-3 in Fig. 5B) at the previous timing. Since the relation between the location in the image (01-2) and the photographed space is made based on the pose of the first camera 121, a vertical relation in the image or a perspective relation between locations in the image can be understood. A plurality of detection regions $C_i$ are set in the image (01-2) at the current timing based on the relation and the acquired information of the objects 401 to 406. In the example of Fig. 11C, regions 901 to 908 inclined in the roll direction are the detection regions $C_i$ (i = 1 - 8). A region 920 is a nondetection region.

Then, the processing method determining unit 213 determines the processing method for each of the detection regions Ci calculated by the region calculation unit 212.

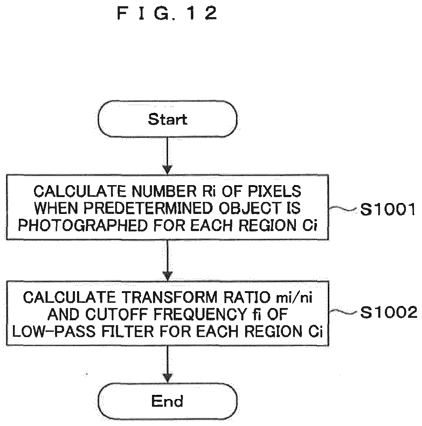

Fig. 12 is a diagram illustrating an operation flow of a process (S306) of determining the image processing method. The processing method determining unit 213 calculates the number $R_i$ of pixels in which an arranged object is photographed when an object set as a detection target in advance is assumed to be arranged at a position furthest away from the camera in the space $S_i'$ corresponding to the detection region Ci, for each of the detection regions $C_i$ of the image (S1001).

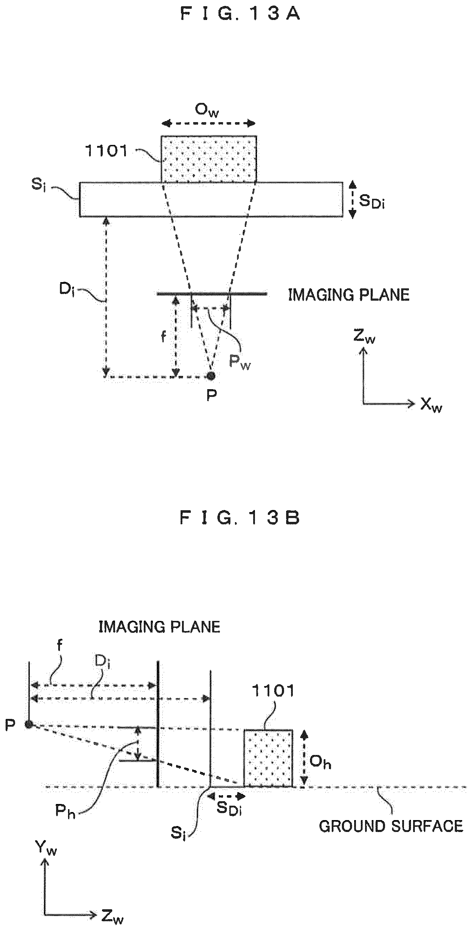

Figs. 13A and 13B are diagrams illustrating an aspect in which an object 1101 arranged at a position furthest from the camera position P in the space $S_i'$ (here, $S_i'$ = Si) corresponding to a certain detection region Ci is photographed on an imaging plane of an image with a predetermined number of pixels in the transverse direction and the longitudinal direction. Fig. 13A is a diagram illustrating an aspect in which the image is photographed in the transverse direction. In Fig. 13A, number of pixels $P_w$ in the transverse direction when the object 1101 is photographed through the first camera is obtained by $P_w = (O_w f/(S_{Di} + D_i))/Q_w$. $O_w$ is a width of the object 1101 that is set as the detection target in advance and set in advance. f is a focal distance from the center P of the camera to the imaging plane and set in advance according to a used lens. $S_{Di}$ is a depth of the space $S_i'$ and set in advance as described above. Di is a distance from the center P of the camera to the space $S_i'$ and set in advance. $Q_w$ is a horizontal width of an imaging element of the camera and has a value specific to a used imaging element.

Fig. 13B is a diagram illustrating an aspect in which the image is photographed in the longitudinal direction. In Fig. 13B, a width $P_h$ of pixels in the longitudinal direction in the imaging plane when the object 1101 is photographed through the camera is obtained by $P_h = (O_h f/(S_{Di} + D_i))/Q_h$. $O_h$ is a height of the object 1101 that is set as the detection target in advance and set in advance. $Q_h$ is a vertical width of an imaging element of the camera and has a value specific to a used imaging element. f, $S_{Di}$, and Di are the same as those in Fig. 13A. A pair of the calculated number $P_w$ of pixels in the transverse direction and the number $P_h$ of pixels in the longitudinal direction is used as the resolution $R_i$ for object detection.

Further, when an object is detected in the space $S_i'$ calculated based on an object that is detected previously such as the spaces 801 to 803 of Fig. 10C or when an object is detected in the space $S_i'$ with no modification of the space Si of Fig. 10B, $O_w$ and $O_h$ may be used as the width and the depth of the object that is detected previously. Thus, when the width and the depth of the object that is detected previously are larger than the width and the depth of the object that are set in advance, it is possible to reduce the resolution Ri and reduce the calculation amount of the object detection unit 215.

Then, the processing method determining unit 213 determines the image processing method including the setting of the resolution for object detection for each of a plurality of regions in the second image calculated by the region calculation unit 212.

The processing method determining unit 213 first calculates the resolution Ri (a pair of $P_w$ and $P_h$) necessary for photographing an object of a certain size with a predetermined number of pixels for each detection region Ci. In other words, the conversion rate $m_i/n_i$ times ($n_i > m_i$) is calculated based on a $R_i/R_i$ using the number Ri of pixels calculated in step S1001 and the number $R_1$ of pixels necessary for photographing the object that is set as the detection target in advance, and the cutoff frequency fi of the low pass filter is determined according to the conversion rate (S1002). The number of pixels necessary for the detection process in the object detection unit 215 is set as $R_1$ in advance. For example, 20 to 30 pixels are used as $R_1$. The cutoff frequency fi of the low pass filter is set in advance for each possible conversion rate.

[S307 to S308] (Region image generation and object detection):

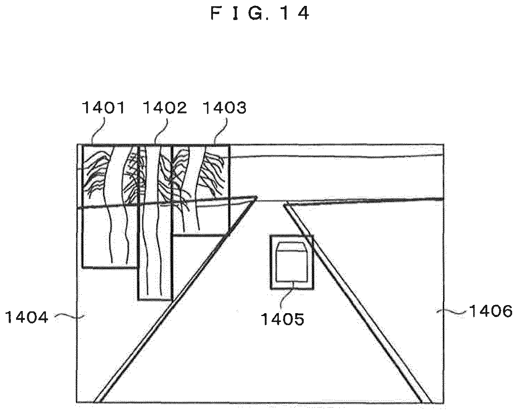

Next, the region image generation and object detection processes (S307 and S308) will be described with reference to Fig. 11B, Fig. 11C, and Fig. 14.

The image generating unit 214 clips portions of the detection regions Ci from the second image stored in the main storage unit 132 using the detection regions Ci calculated by the region calculation unit 212 and the image processing method (the conversion rate $m_i/n_i$ times and the cutoff frequency fi of the low pass filter) calculated by the processing method determining unit 213, and then reduces the clipped portions using the conversion rate $m_i/n_i$ times and the cutoff frequency fi of the low pass filter (S307). As a result, N images serving as the object detection target are generated.

The necessary number $R_1$ of pixels of the object serving as the detection target is set in advance, and the perspective relation between the locations in the image is understood. Typically, there is a relation that an object far from the mobile object or an object higher than its own vehicle is photographed as an upper portion of the image, and an object close to the mobile object or the road surface is photographed as a lower portion of the image. Thus, when the detection region is close to or far from the center P of the camera, there occurs a difference in the image processing method, and thus it is possible to cause the number of pixels of the object serving as the detection target over the entire region of the image to fall within a certain range. By setting the necessary number of pixels of the object serving as the detection target to be reduced, it is possible to detect the object at a high speed. Further, since the number of pixels of the object serving as the detection target falls within the certain range, it is possible to apply the object detection technique in which it is considered, and it is possible to detect the object at the high detection rate.

Further, when the pose of the camera is inclined in the roll direction, the detection region Ci has a parallelogram as illustrated in Figs. 11B and 11C. Generally, it is efficient to performing the image processing in a rectangular form, and thus the detection region Ci is modified to have the rectangular form before the detection region Ci is reduced. Since the detection region Ci is modified to have the rectangular form, when the image generated by the image generating unit 214 is read from the main storage unit 132 in the object detection process of step S308, a single technique can be used regardless of the pose of the first camera 121. However, a lot of process time may be taken for the image modification process, and thus, in this case, when the object detection unit 215 reads the image generated by the image generating unit 214 from the main storage unit 132, it is possible to cope with it by devising an access order.

The object detection unit 215 performs the object detection process on the N images generated in step S307, integrates the obtained detection result with the object information at the previous timing, stores the integration result in the main storage unit 132, and transmits the integration result to the mobile object control unit 123 (S308).

A known method may be used as the object detection process.

Fig. 14 is a diagram illustrating a result of performing the objection detection process on the detection regions Ci (i = 1 to 8) of Fig. 11C through the object detection unit 215. In Fig. 14, regions 1201 to 1206 are detection results. The object detection unit 215 acquires a plurality of region images from the image generating unit 214, detects an object for each of the region images in the second image, and integrates the obtained detection result with the object information obtained at the previous timing. As a result, for example, a vehicle corresponding to the object 405 of Fig. 5B is detected in the region 1201.

As described above, the object detection apparatus 1000 according to the present embodiment includes a pose calculating unit that obtains a pose of a camera, a region setting unit that makes a relation between a location in an image and a photographed space based on the obtained pose, and sets a plurality of regions on an image photographed through the camera using the relation, a processing method setting unit that sets each of resolutions of images in a plurality of regions, a resolution converting unit that performs resolution conversion according to the set resolution, and a detecting unit that detects an object for each of the plurality of images after the resolution conversion.

According to this feature, the pose of the camera is calculated, the relation between the location in the image and the photographed space is made based on the calculated pose of the camera, and the image photographed through the camera is appropriately divided into a plurality of regions based on the relation, and thus even when the inclination of the camera in the roll direction is large, the object can be detected at the high detection rate.

Further, when the flag indicating the abnormality of the frame image is transmitted from the camera pose calculation unit 211, the pose of the camera 122 calculated through the camera pose calculation unit 211 is determined to have a large error than an original value, and thus the object detection process at the current timing may be stopped. As a result, the erroneous detection of the object detection unit 215 can be suppressed.

Further, reliability of the result of performing the object detection process may be measured and stored in the main storage unit 132 in association with the object information. When the movable region of the object detected at the immediately previous timing is calculated in step S303 of the region calculation unit 213, a margin of the movable region is set, and the margin is variably controlled according to the reliability of the detection result, and thus it is possible to generate an appropriate obstacle map and perform an efficient object detection process.

The present invention is not limited to the above embodiment, and various modified examples are included. The above embodiment has been described in detail to facilitate understanding of the present invention, and the present invention is not limited to a configuration necessarily including all the components described above. Further, some components of a certain embodiment may be replaced with components of another embodiment. Further, components of another embodiment may be added to components of a certain embodiment. Furthermore, other components may be added to, deleted from, and replace some components of each embodiment.

All or some of the above components, functions, processing units, processing means, or the like may be implemented by hardware such that they are designed by, for example, as integrated circuit (IC). The above components, functions, or the like may be implemented by software by interpreting and executing a program of implementing the functions through a processor. Information such as a program, a table, or a file for implementing each function may be stored in a recording apparatus such as a memory, a hard disk, a solid state drive (SSD) or a recording medium such as an IC card, an SD card, or a DVD.

REFERENCE SIGNS LIST

| | |
|---|---|
| 100 | robot |
| 121 | first camera |
| 122 | second camera |
| 123 | mobile object control unit |
| 124 | moving mechanism |
| 125 | information processing apparatus |
| 126 | transceiving apparatus |
| 127 | storage apparatus |
| 128 | external world measuring apparatus |
| 129 | internal world measuring apparatus |
| 140 | display apparatus |
| 211 | camera pose calculation unit |
| 212 | region calculation unit (region setting unit) |
| 213 | processing method determining unit |
| 214 | image generating unit |
| 215 | object detection unit |
| 701 | object of detection target |
| 1000 | object detection apparatus |
| 1101 | object |

Claims

1. An object detection apparatus, comprising:

a camera pose calculation unit;
a region setting unit;
a processing method determining unit;
an image generating unit; and
an object detection unit,

wherein the camera pose calculation unit acquires information related to a pose of a camera installed in a mobile object,
wherein the region setting unit makes a relation between a location in an image photographed through the camera and a photographed space based on the pose of the camera, and sets a plurality of detection regions on the image based on the relation,

wherein the processing method determining unit determines an image processing method including a setting of a resolution for each of the plurality of detection regions,

wherein the image generating unit converts an image in each of the detection regions to have the set resolution, and generates a region image, and

wherein the object detection unit detects an object using each of the region images.

2. The object detection apparatus according to claim 1,
wherein the region setting unit sets a first coordinate system based on a road surface on which the mobile object is traveling based on the pose of the camera, arranges a plurality of virtual spaces in the first coordinate system, and sets a plurality of regions obtained by photographing the plurality of virtual spaces through the camera on the image as the plurality of detection regions.

3. The object detection apparatus according to claim 2,
wherein, in order to make the relation between the location on the image and the photographed space, the region setting unit sets the plurality of detection regions on the image photographed at a current timing through the camera, based on an object detection result on an immediately previous image photographed at an immediately previous timing through the camera.

4. The object detection apparatus according to claim 3,
wherein the region setting unit calculates a region out of a field of vision that is invisible from the camera at the immediately previous timing, obtains a region serving as an obstacle at the current timing based on the region out of the field of vision, and modifies each of the detection regions based on the region serving as the obstacle.

5. The object detection apparatus according to claim 2,
wherein the virtual space has a rectangular shape and is set on the same plane as the road surface.

6. The object detection apparatus according to claim 2,
wherein a width of each of the virtual spaces increases as a distance from a position of the camera increases.

7. The object detection apparatus according to claim 4,
wherein the region setting unit obtains a region serving as an obstacle at the current timing based on the object detected at the immediately previous timing, and modifies each of the detection regions based on the region serving as the obstacle.

8. The object detection apparatus according to claim 1,
wherein the camera pose calculation unit obtains a pose of a first camera based on a first image photographed through a second camera, and
wherein the region setting unit makes a relation between a location in an image photographed through the first camera and a photographed space based on the pose of the first camera, and sets the plurality of detection regions on the image based on the relation.

9. The object detection apparatus according to claim 1,
wherein the processing method determining unit calculates the number of first pixels in which an arranged object is photographed when an object set as a detection target in advance is assumed to be arranged at a position furthest from the camera in the space corresponding to the detection region for each of the detection regions, and calculates a conversion rate of the image based on the number of first pixels and the number of second pixels necessary when the object set as the detection target in advance is photographed.

10. The object detection apparatus according to claim 9,
wherein the image generating unit modifies the detection region of a parallelogram shape clipped from the image to have a rectangular shape, and reduces each of the detection region of the parallelogram shape using the conversion rate of the image and a cutoff frequency of a low pass filter which are set by the processing method determining unit.

11. An object detection method of detecting an object present in front of a mobile object moving along a path, comprising:

obtaining a pose of a camera installed in the mobile object;

making a relation between a location in an image and a photographed space based on the pose of the camera, and setting a plurality of detection regions on an image photographed through the camera based on the relation;

setting a resolution at which a detection process of each of the detection regions is performed;

converting the image in each of the detection regions to have the resolution; and

detecting an object using the image in each of the detection regions that has undergone resolution conversion.

12. The object detection method according to claim 11,

wherein, setting a first coordinate system based on a road surface on which the mobile object is traveling based on the pose of the camera,

arranging a plurality of virtual spaces in the first coordinate system, and

setting a plurality of regions obtained by photographing the plurality of virtual spaces through the camera on the image as the plurality of detection regions.

13. The object detection method according to claim 2,

wherein, in order to make the relation between the location on the image and the photographed space, setting the plurality of detection regions on the image photographed at a current timing through the camera based on an object detection result on an immediately previous image photographed at an immediately previous timing through the camera.

14. A mobile robot, comprising:

a moving mechanism that moves a robot main body on a path;
a camera mounted in the robot main body;
a pose calculating unit that obtains a pose of the camera;
a region setting unit;
a processing method determining unit;
a resolution converting unit; and
a detecting unit,

wherein the region setting unit makes a relation between a location in an image of a space in front of the mobile robot photographed through the camera and a photographed space based on the pose of the camera, and sets a plurality of detection regions on the image based on the relation,

wherein the processing method determining unit determines an image processing method including a setting of a resolution for each of the plurality of detection regions,

wherein the image generating unit converts an image in each of the detection regions to have the set resolution, and generates a region image, and

wherein the object detection unit detects an object using each of the region images.

15. The mobile robot according to claim 14,

wherein the region setting unit sets a first coordinate system based on a road surface on which the robot is traveling based on the pose of the camera, arranges a plurality of virtual spaces in the first coordinate system, and sets a plurality of regions obtained by photographing the plurality of virtual spaces through the camera on the image as the plurality of detection regions.

F I G. 1 A

TRANSCEIVING
APPARATUS
126

DISPLAY
APPARATUS
140

121
FIRST CAMERA 122

INFORMATION
PROCESSING APPARATUS
125    124

SECOND CAMERA 123

MOVING MECHANISM

MOBILE OBJECT
CONTROL UNIT

EXTERNAL WORLD
MEASURING APPARATUS
128

STORAGE
APPARATUS
127

INTERNAL WORLD
MEASURING APPARATUS
129

1000

100

F I G. 1 B

134

CPU
131

MAIN
STORAGE UNIT
132

AUXILIARY
STORAGE UNIT
133

125

14

F I G. 2

SECOND CAMERA  122                    121

                                    FIRST CAMERA

201

┌─────────────────────────────────────────────┐
│  CAMERA    POSE        211                    │
│  CALCULATION UNIT                             │
│                                               │
│              212                              │
│  REGION                 IMAGE                 │
│  CALCULATION UNIT       GENERATING UNIT   214 │
│                                               │
│  213                                          │
│  PROCESSING                                   │
│  METHOD                                       │
│  DETERMINING UNIT                             │
│                                               │
│                         OBJECT                │
│                         DETECTION UNIT    215 │
└─────────────────────────────────────────────┘

                         MOBILE OBJECT      123
                         CONTROL UNIT

F I G. 3

```
        ┌─────────────┐
        │    Start    │
        └─────────────┘
               │
               ▼
┌───────────────────────────┐
│  CAPTURE FIRST IMAGE (GROUP) │ ～S301
│  THROUGH SECOND CAMERA       │
│  AT TIMING Tn                │
└───────────────────────────┘
               │
               ▼
┌───────────────────────────┐
│  CAPTURE SECOND IMAGE       │ ～S302
│  THROUGH FIRST CAMERA       │
│  AT TIMING Tn               │
└───────────────────────────┘
               │
               ▼
┌───────────────────────────┐
│  CALCULATE OBSTACLE MAP     │
│  BASED ON OBJECT INFORMATION │ ～S303
│  AND INFORMATION OF FIELD OF │
│  VISION AT TIMING Tn-1       │
└───────────────────────────┘
               │
               ▼
┌───────────────────────────┐
│  CALCULATE    POSE   OF     │ ～S304
│  FIRST CAMERA BASED ON      │
│  FIRST IMAGE (GROUP)        │
└───────────────────────────┘
               │
               ▼
┌───────────────────────────┐
│  CALCULATE PLURALITY OF     │
│  DETECTION REGIONS Ci IN    │
│  SECOND IMAGE BASED ON      │ ～S305
│  OBJECT INFORMATION AND     │
│  OBSTACLE MAP               │
└───────────────────────────┘
               │
               ▼
┌───────────────────────────┐
│  DETERMINE PROCESSING       │
│  METHOD OF EACH DETECTION   │ ～S306
│  REGION Ci IN SECOND IMAGE  │
└───────────────────────────┘
               │
               ▼
┌───────────────────────────┐
│  GENERATE IMAGE OF EACH     │
│  DETECTION REGION Ci        │ ～S307
│  BASED ON SECOND IMAGE      │
└───────────────────────────┘
               │
               ▼
┌───────────────────────────┐
│  DETECT OBJECT FOR          │
│  IMAGE OF EACH DETECTION    │ ～S308
│  REGION Ci                  │
└───────────────────────────┘
               │
               ▼
        ┌─────────────┐
        │     End     │
        └─────────────┘
```

EP 3 107 069 A1

F I G. 4

FIG. 5A

01-2

FIG. 5B

402 403

00-3

406

401

405

FIG. 6

$Y_c$ $Z_c$

$X_c$

ROAD SURFACE

$Y_w$ $Z_w$

$X_w$

CENTER OF SECOND CAMERA

F I G . 7 A

511
512
513
503
501
502

$Y_W$
$Z_W$
$X_W$

F I G . 7 B

506
504
523
505
P

$Y_W$
$Z_W$
$X_W$

F I G . 7 C

504 507 505

P

P_{t-1}

$Z_w$
$X_w$

F I G . 7 D

$Y_w$ $Z_w$
$X_w$

511 512
506

504

513

505

P

F I G. 8

```
                    ┌──────────────┐
                    │    Start     │
                    └──────┬───────┘
                           │
                           ▼
        ┌──────────────────────────────┐
        │     SET N VIRTUAL SPACES      │
        │          IN FRONT             │───S601
        └──────────────┬───────────────┘
                       │
                       ▼
        ┌──────────────────────────────┐
        │  TRANSFORM VIRTUAL SPACE Si   │
        │ ACCORDING TO OBSTACLE MAP     │───S602
        │  AND GENERATE NEW SPACE Si'   │
        └──────────────┬───────────────┘
                       │
                       ▼
        ┌──────────────────────────────┐
        │    CALCULATE REGION Ci IN     │
        │  IMAGE I OF FIRST CAMERA IN   │───S603
        │      VIRTUAL SPACE Si'        │
        └──────────────┬───────────────┘
                       │
                       ▼
               ┌──────────────┐
               │     End      │
               └──────────────┘
```

FIG. 9A

FIG. 9B

(A)                              (B)

F I G. 1 0 A

F I G. 1 0 B

## FIG. 10C

## FIG. 10D

## FIG. 10E

F I G. 1 1 A

$S_i'$

$Y_c$ $Z_c$

$X_c$

$Y_w$ $Z_w$

$X_w$

CENTER OF FIRST CAMERA

F I G. 1 1 B

$C_i$

$Y_c$

$X_c$

I

F I G. 1 1 C

920

01-2
908
907
906
905
904

906

901 902 903

901~908 : DETECTION REGION $C_i$ (i=1-8)

F I G. 1 2

```
          ┌──────────────┐
          │    Start      │
          └───────┬──────┘
                  │
                  ▼
  ┌──────────────────────────────┐
  │ CALCULATE NUMBER Ri OF PIXELS │
  │ WHEN PREDETERMINED OBJECT IS  │~ S1001
  │PHOTOGRAPHED FOR EACH REGION Ci│
  └───────────────┬──────────────┘
                  │
                  ▼
  ┌──────────────────────────────┐
  │CALCULATE TRANSFORM RATIO mi/ni│
  │  AND CUTOFF FREQUENCY fi OF   │~ S1002
  │ LOW-PASS FILTER FOR EACH REGION Ci│
  └───────────────┬──────────────┘
                  │
                  ▼
          ┌──────────────┐
          │     End       │
          └──────────────┘
```

# F I G. 1 3 A

# F I G. 1 3 B

F I G. 1 4

## INTERNATIONAL SEARCH REPORT

| International application No. |
| --- |
| PCT/JP2014/058076 |

A. CLASSIFICATION OF SUBJECT MATTER

*G06T7/20(2006.01)i*

According to International Patent Classification (IPC) or to both national classification and IPC

B. FIELDS SEARCHED

Minimum documentation searched (classification system followed by classification symbols)

G06T7/20

Documentation searched other than minimum documentation to the extent that such documents are included in the fields searched

| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br><br>A | JP 2005-56295 A  (Iwane Laboratories, Ltd.),<br>03 March 2005 (03.03.2005),<br>paragraphs [0005], [0006], [0036], [0037],<br>[0045] to [0049]<br>(Family: none) | 1,2,11,12,<br>14,15<br>3-10,13 |
| Y | JP 2006-185406 A  (Nissan Motor Co., Ltd.),<br>13 July 2006 (13.07.2006),<br>paragraph [0010]<br>& US 2008/0273750 A1    & EP 1817761 A<br>& WO 2006/059201 A2    & DE 602005026847 D | 1,2,11,12,<br>14,15 |
| Y | JP 2006-268097 A  (Nissan Motor Co., Ltd.),<br>05 October 2006 (05.10.2006),<br>paragraphs [0007] to [0010]<br>& US 2006/0217886 A1    & EP 1705917 A2<br>& CN 1838174 A | 1,2,11,12,<br>14,15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 April, 2014 (25.04.14) | 13 May, 2014 (13.05.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/058076

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-185438 A  (Matsushita Electric Industrial Co., Ltd.), 13 July 2006 (13.07.2006), paragraph [0036] & US 2010/0222925 A1 | 14,15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013225289 A